# EUROPEAN PATENT SPECIFICATION

(11) **EP 4 090 150 B1**
(45) Date of publication and mention of the grant of the patent: **03.12.2025**
(21) Application number: 20715206.7
(22) Date of filing: 15.01.2020
(51) Int. Cl.: A01D 46/26

(54) **IMPROVED JOINT FOR MACHINERY COMPONENTS, AND PORTABLE SHAKER TYPE MACHINE EQUIPPED WITH SUCH JOINT**
VERBESSERTE VERBINDUNG FÜR MASCHINENKOMPONENTEN UND TRAGBARE SCHÜTTELMASCHINE MIT EINER SOLCHEN VERBINDUNG
JOINT AMÉLIORÉ POUR COMPOSANTS DE MACHINERIE ET MACHINE DE TYPE AGITATEUR PORTATIF ÉQUIPÉE D'UN TEL JOINT

(43) Date of publication of application: 23.11.2022
(73) Proprietor: Cifarelli S.p.A., 27058 Voghera (Pavia) (IT)
(72) Inventor: CIFARELLI, Roberto, 27058 VOGHERA (PAVIA) (IT)
(74) Representative: Tarabbia, Luigi
(86) International application number: PCT/IT2020/000005
(87) International publication number: WO 2021/144818

(56) References cited:
- EP-A1- 1 004 233
- ES-A1- 2 197 731
- ES-U- 1 038 129

## Description

### Technical field

The present invention relates to a joint having a function of connection between parts of a machinery (for example, a so-called "vibrating rod" of a shaker for agricultural use) and relates to a machinery made up of at least two pieces or parts interconnected through or portable shaker for gardening or agriculture.

This portable shaker is particularly used in garden or field care, particularly in cases where you want to pick small fruits, such as olives, or to eliminate dead parts of the plant such as dry leaves: as a rule, the portable shaker is handled or embraced by an operator so as to engage a branch to be shaken by means of a hooked rod of the shaker itself.

This hooked rod shakes the branch thanks to a vibratory motion along the development direction of the rod itself, and this same vibratory motion is generated by suitable motor devices inside a machine body (which in turn, at one of its ends has a appropriate attachment for the vibrating rod, and in such attachment there is precisely a so-called "joint").

### Background art

A connection joint between a so-called "machine body" and a so-called "vibrating rod" of a portable shaker is known from a previous patent of the Applicant (the Italian property number IT01314133): such patent illustrates a joint consisting of two parts, one of which can be connected to a machine body (and more precisely to a kinematic transmission housed in the machine body) while the other is coaxially mounted to the first and can be plugged onto a vibrating rod: when in operating conditions, this joint allows a relative rotation of the vibrating rod along an ideal geometric axis which defines the alternative vibration direction (or "coming and going") of the vibrating rod with respect to the machine body, and such relative rotation allows e.g. the vibrating rod - as well as the hook that usually this rod has on its opposite end - to conform or adapt to the geometry of the branch without imposing twisting efforts to the rod itself.

However, the joint of the known art described so far has some drawbacks both in terms of production complexity, and in terms of installation on the "shaker" machine and in terms of any maintenance or repair of the joint itself: particularly, the construction of this joint is such that its part integral with the machine body is practically irreversible and completely contained within the machine body, to the point that if replacement of the joint is necessary (e.g., due to breakage following excessive forces or vibrations) it is necessary the dismantling of a large part of the machine body in order to access the joint itself.

Furthermore, the joint of the known art mentioned above has little or almost no ability to regulate the "torsional resistance" of the vibrating rod around its ideal axis of rotation, and this constitutes a limitation of the possible areas of use of the shaker in terms of adjustment capabilities that can be exert by the operator. Furthermore, the joint of the known type introduced above has a high production and installation cost, which therefore limits its adoption and diffusion. Examples of joints of the known type are reported in documents ES1038129U, EP1004233A1, and ES2197731A1.

### Object of the Invention

The technical task of the present invention is therefore to make a joint available (as well as a portable shaker adopting such joint between its vibrating rod and its machine body) which is free from the drawbacks emerging from the known art.

The object of the present invention is to provide a joint which is cheaper in terms of construction, faster in terms of installation and more practical in removal/replacement/repair.

A further object of the present invention is therefore to provide a joint which is also easily and quickly adjustable in terms of resistance to relative rotation between the vibrating rod and the machine body (or more generally, in terms of relative rotation between the two mechanical components between which the joint is interposed).

The specified technical task and the specified purposes are substantially achieved by an object (as well as by a machine, e.g., of the "portable shaker" type equipped with such a joint) comprising the technical characteristics shown in one or more of the appended claims, and such that the dependent claims correspond to possible embodiments with additional/optional technical characteristics of the main invention.

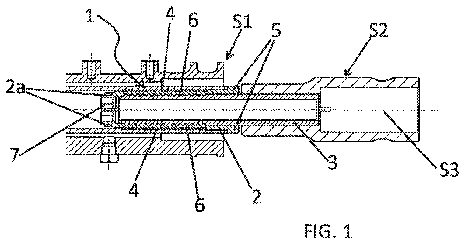

The specified technical task and the specified purposes are substantially achieved by a joint illustrated by way of a non-limiting example, in Figure 1, which illustrates a sectional view of the joint itself in its condition of interposition between two components of a machinery (and in particular, between a machine body and a vibrating rod of a portable shaker).

The joint according to the invention, which can be interposed between two parts S1 and S2 of a machine, is globally indicated by the reference number 1 and basically comprises a first and a second interconnection element 2 and 3 respectively connectable to a first part and a second part S1 and S2 of a machinery (and in turn, the second interconnection element 3 is connectable to the first interconnection element 2) as well as related constraint means interposed between the interconnection elements 2 and 3 so as to achieve a relative rotation between these same interconnection elements around an ideal axis S3 (which typically can be the geometric vibration axis of a rod of a portable shaker). Advantageously, the joint 1 further comprises reversible connection means active between the first interconnection element 2 with respect to the first part S1 (of the machine) and/or active between the second interconnection element 3 with respect to the second part S2 (of the machinery): the specific nature of these reversible connection means makes the joint very easily/quickly separable and above all in a fully manageable and decidable way by the machine operator.

As a consequence of the fact that the first and second interconnection elements 2 and 3 can rotate relatively to each other, also the first part S1 and the second part S2 of the machinery can rotate relatively to each other: e.g., certain types of portable shaker can be embraced so that the machine body is substantially "stationary" with respect to the operator while the vibrating rod which comes out of the machine body can rotate relatively with respect to the machine body (e.g., around the axis S3).

In terms of interconnection possibilities, for the purposes of the present invention with the expressions "first part of machinery S1" and "second part of machinery S2" it is intended any single component or an assembly of several sub-components of a machinery, provided that formally divided between them and interconnected through joint 1: by way of example, the possible "first parts S1" can be movable rods connected to a connection rod assembly of an endothermic engine (in turn contained in a carter which externally defines a machine body) or they can be the same external carters of the machine body itself (as can occur, e.g., in another invention of the Applicant, wherein an electric motor gives a predetermined type of vibration inside the carter which externally defines the machine body). According to a further aspect of the invention, the joint 1 further comprises means for adjusting the relative rotation freedom between the first interconnection element 2 and the second interconnection element 3: such means for adjusting the relative rotation freedom are able to determine an angular arc of relative rotation and/or a speed range of relative rotation between the interconnection elements 2 and 3 and therefore they allow to increase or decrease, according to the actual conditions of use of the machinery, the freedom of the two parts S1 and S2 to rotate with respect to each other.

From a structural point of view, the reversible connection means and/or the means for adjusting the relative rotation freedom comprise threads 4 cooperatively obtained, according to the various possibilities of implementation of the invention, between:
- the first interconnection element 2 and the first part S1 of the machinery; and/or
- the second interconnection element 3 and the second part S2 of the machinery.

In a possible embodiment of the invention, the reversible connection means and/or the means for adjusting the relative rotation freedom are coincident: in this way, by suitably acting on a thread 4 (which may be the only one present in the joint 1) it is possible to obtain both the structural interfacing with the parts of the machinery and the adjustment of the reciprocal freedom of rotation.

In order to be operable by an operator, the reversible connection means and/or means for adjusting the relative rotation freedom also comprise actuation interfaces 5 which can be operated by an operator, e.g. by means of a tool (a wrench or an analogous instrument) to impose a rotation about the ideal axis S3: these actuation interfaces 5 can conveniently be integral with the first interconnection element 2 (or with the second interconnection element 3, if necessary) and preferably comprise shaped nuts or prismatic surfaces counter-shaped to tools manoeuvrable by the aforementioned operator.

From a functional point of view, the means for adjusting the relative freedom are suitable to selectively determine a variable value of friction and/or resistance to the relative movement between the first interconnection element 2 and the second interconnection element 3, and such variable friction value, in turn, can be determined as a function of a corresponding value and/or a rotation direction around the ideal axis S3. The kinematic effects of the rotation around the ideal axis S3 just mentioned, due to the effect of the mechanical interference between the relative moving components considered here, can be related to a deformation of the first interconnection element 2 and/or the second interconnection element 3 (deformation which is then imposed through rotation around the ideal axis S3) and therefore determine a more or less "pressure" feedback between the surfaces of the structural components, increasing or decreasing friction and therefore regulating a braking effect between the surfaces themselves.

If the needs of the moment require it, the means for adjusting the relative freedom may further comprise amplification elements of the deformation cooperatively active with the threads 4: such amplification elements comprise conical surfaces (not represented in Figure 1) in mutual contact and cooperatively defined between:
- the first interconnection element 2 and the second interconnection element 3 and/or between the first interconnection element 2; and/or
- the second interconnection element 2 and the first part S1 of the machinery; and/or
- the second interconnection element 3 and the second part S2 of the machinery.

In other words, the adjustment of the "hardness" of the relative rotation is done through a conical part which can be screwed more or less in depth on a cylindrical part: this allows to extend the control and variation range of the relative friction between the parts of the joint 1 put into relative rotation. Returning to the related constraint means interposed between the first interconnection element 2 and the second interconnection element 3, it can be seen, with reference to the attached figure, that these comprise a multiplicity of coronal surfaces 6 defined by a succession of coaxial grooves and ridges along the ideal axis S3: in turn, such coronal surfaces 6 are obtained on the first and second interconnection elements 2 and 3 and are mutually adjacent in case of assembly of the joint 1 (so that the ridges of one of the coronal surfaces fit into the grooves of the other between the coronal surfaces themselves).

If possibly required by particular coupling needs with equally particular parts of a machinery, the first and/or the second interconnection element 2 and/or 3 can be made of two half-parts: these half-parts 2a define an engagement cavity 7 which can be operated by an operator through an engagement tool during the interconnection of the joint to the machinery.

An innovative and original machinery also forms the subject of the present invention, which typically can be a portable shaker, which comprises a machine body S1 (housing a motor and a vibrating kinematic mechanism connected to this motor) and a vibrating rod S2 connected to the vibrating kinematic mechanism; advantageously, such machinery/shaker further comprises at least one joint 1 interposed between the machine body S1 (and more precisely between the vibrating kinematic mechanism of the machine body S1) and the vibrating rod S2, and such joint (1) is of the type according to what described so far and/or to what is claimed hereinafter.

The joint according to the invention achieves several technical advantages with respect to the known art, starting from the fact that through its structural architecture a simpler and faster installation and assembly method is obtained but at the same time also of disassembly and removal, with the consequent equally simple and rapid possibility of disconnecting the two pieces of machinery (e.g., referring to portable shakers, the possibility of disconnecting and reconnecting in subsequent working times vibrating rods of different length or with end hooks of different conformations).

At the same time, it should be noted the easy and quick adjustment mode of the resistance to relative rotation, which is selected by the operator with a simple intervention and also having generalist and not purpose specific tools (e.g, a wrench having a suitable section/measurement) Nevertheless, the reversibility of the engagement/disengagement of the joint with respect to the various parts/components of the machinery must be noted, with evident positive effects on the substitutability and maintainability (in this regard, it should also be noted that the present joint can be removed from a machine body of a shaker without necessarily opening or dismantling the external carters of the machine body itself) and also noting that the machinery (e.g., the portable shaker) equipped with such joint is not only more reliable and practical in use, but also more light and less expensive.

## Claims

1. joint which can be interposed between two parts (S1, S2) of a machinery, said joint (1) comprising:
- a first interconnection element (2) connectable to said first part (S1) of the machinery;
- a second interconnection element (3) connectable to said second part (S2) of the machinery and also connectable to said first interconnection element (2);
- related constraint means interposed between said first interconnection element (2) and said second interconnection element (3) itself so as to achieve a relative rotation between said interconnection elements (2, 3) around an ideal axis (S3); and
- reversible connection means configured to connect the first interconnection element (2) with respect to the first part (S1) and/or configured to connect the second interconnection element (3) with respect to the second part (S2),
**characterized in that** at least the first interconnection element (2), and/or the second interconnection element (3), is/are made of two half-parts, said half-parts (2a) preferably defining an engagement cavity which can be operated by an operator through an engagement tool during the interconnection of the joint to the machinery.

2. joint according to claim 1, wherein there are also means for adjusting the relative rotation freedom between the first interconnection element (2) and the second interconnection element (3), said means for adjusting the relative rotation freedom being suitable to determine a relative rotation angular arc and/or a relative rotation speed range between the interconnection elements (2, 3).

3. joint according to claims 2 or 3, wherein the reversible connection means and/or the means for adjusting the relative rotation freedom comprise threads (4) cooperatively obtained between:
- the first interconnection element (2) and the first part (S1) of the machinery; and/or
- the second interconnection element (3) and the second part (S2) of the machinery.

4. joint according to claim 3, wherein the reversible connection means and/or the means for adjusting the relative rotation freedom are coincident:

5. joint according to claim 3, wherein the reversible connection means and/or the means for adjusting the relative rotation freedom also comprise actuation interfaces 5 which can be operated by an operator, preferably by means of a tool to impose a rotation preferably around said ideal axis (S3), said actuation interfaces (5) being integral with the first interconnection element (2) or with the second interconnection element (3) and preferably comprising shaped nuts or prismatic surfaces counter-shaped to tools manoeuvrable by said operator.

6. joint according to claim 5, wherein the means for adjusting the relative freedom are suitable to selectively determine a variable value of friction and/or resistance to the relative movement between the first interconnection element (2) and the second interconnection element (3), said variable friction value being determinable as a function of a corresponding value and/or a direction of said rotation around the ideal axis (S3) and preferably as a function of a deformation of the first interconnection element (2) and/or of the second interconnection element (3) imposed through said rotation around the ideal axis (S3).

7. joint according to claims 3 and 6, wherein the means for adjusting the relative freedom further comprise amplification elements of the deformation cooperatively active with the threads (4): said amplification elements comprising conical surfaces in mutual contact and cooperatively defined between:
- the first interconnection element (2) and the second interconnection element (3) and/or between the first interconnection element (2); and/or
- the second interconnection element (2) and the first part (S1) of the machinery; and/or
- the second interconnection element (3) and the second part (S2) of the machinery.

8. joint according to claim 1, wherein the related constraint means interposed between the first interconnection element (2) and the second interconnection element (3) comprise a plurality of coronal surfaces (6) defined by a succession of coaxial grooves and ridges along the ideal axis (S3), said coronal surfaces (6) being obtained on the first and second interconnection elements (2, 3) and being mutually adjacent in case of assembly of the joint (1).

9. machinery, preferably of the portable shaker type, comprising:
- a machine body (S1) housing inside it a motor and a vibrating kinematic mechanism connected to said motor; and
- a vibrating rod (S2) connected to said vibrating kinematic mechanism, **characterized in that** it also comprises at least one joint (1) interposed between said machine body (S1), and preferably between the vibrating kinematic mechanism of the machine body (S1), and the vibrating rod (S2), said joint (1) being of the type according to any one of the preceding claims.

## Patentansprüche

1. Verbindung, die zwischen zwei Teilen (S1, S2) einer Maschine eingefügt werden kann, wobei die Verbindung (1) umfasst:
- ein erstes Zusammenschaltungselement (2), das mit dem ersten Teil (S1) der Maschine verbunden werden kann;
- ein zweites Zusammenschaltungselement (3), das mit dem zweiten Teil (S2) der Maschine verbunden werden kann und auch mit dem ersten Zusammenschaltungselement (2) verbunden werden kann;
- zugehörige Zwangsmittel, die zwischen dem ersten Zusammenschaltungselement (2) und dem zweiten Zusammenschaltungselement (3) selbst eingefügt sind, um eine Relativdrehung zwischen den Zusammenschaltungselementen (2, 3) um eine ideale Achse (S3) zu erreichen; und
- reversible Verbindungsmittel, die konfiguriert sind, um das erste Zusammenschaltungselement (2) in Bezug auf das erste Teil (S1) zu verbinden und/oder konfiguriert sind, um das zweite Zusammenschaltungselement (3) in Bezug auf das zweite Teil (S2) zu verbinden,
**dadurch gekennzeichnet, dass** zumindest das erste Zusammenschaltungselement (2) und/oder das zweite Zusammenschaltungselement (3) aus zwei Halbteilen besteht/bestehen, wobei die Halbteile (2a) vorzugsweise einen Eingriffshohlraum definieren, der von einem Bediener durch ein Eingriffswerkzeug während der Zusammenschaltung der Verbindung mit der Maschine bedient werden kann.

2. Verbindung nach Anspruch 1, wobei ferner Mittel zur Einstellung der Relativdrehungsfreiheit zwischen dem ersten Zusammenschaltungselement (2) und dem zweiten Zusammenschaltungselement (3) vorhanden sind, wobei die Mittel zur Einstellung der Relativdrehungsfreiheit geeignet sind, um einen Relativdrehungswinkelbogen und/oder einen Relativdrehungsgeschwindigkeitsbereich zwischen den Zusammenschaltungselementen (2, 3) zu bestimmen.

3. Verbindung nach Anspruch 2 oder 3, wobei die reversiblen Verbindungsmittel und/oder die Mittel zur Einstellung der Relativdrehungsfreiheit Gewinde (4) umfassen, die zusammenwirkend erhalten werden zwischen:
- dem ersten Zusammenschaltungselement (2) und dem ersten Teil (S1) der Maschine; und/oder
- dem zweiten Zusammenschaltungselement (3) und dem zweiten Teil (S2) der Maschine.

4. Verbindung nach Anspruch 3, wobei die reversiblen Verbindungsmittel und/oder die Mittel zur Einstellung der Relativdrehungsfreiheit zusammenfallen:

5. Verbindung nach Anspruch 3, wobei die reversiblen Verbindungsmittel und/oder die Mittel zur Einstellung der Relativdrehungsfreiheit auch Betätigungsschnittstellen 5 umfassen, die von einem Bediener bedient werden können, vorzugsweise mittels eines Werkzeugs, um eine Drehung vorzugsweise um die ideale Achse (S3) zu erzwingen, wobei die Betätigungsschnittstellen (5) einstückig mit dem ersten Zusammenschaltungselement (2) oder mit dem zweiten Zusammenschaltungselement (3) sind und vorzugsweise geformte Muttern oder prismatische Oberflächen umfassen, die zu von dem Bediener manövrierbaren Werkzeugen entgegengesetzt geformt sind.

6. Verbindung nach Anspruch 5, wobei die Mittel zur Einstellung der relativen Freiheit geeignet sind, selektiv einen variablen Wert der Reibung und/oder des Widerstands gegen die Relativbewegung zwischen dem ersten Zusammenschaltungselement (2) und dem zweiten Zusammenschaltungselement (3) zu bestimmen, wobei der variable Reibungswert in Abhängigkeit von einem entsprechenden Wert und/oder einer Richtung der Drehung um die ideale Achse (S3) und vorzugsweise in Abhängigkeit von einer durch die Drehung um die ideale Achse (S3) erzwungenen Verformung des ersten Zusammenschaltungselements (2) und/oder des zweiten Zusammenschaltungselements (3) bestimmbar ist.

7. Verbindung nach den Ansprüchen 3 und 6, wobei die Mittel zur Einstellung der relativen Freiheit ferner Verstärkungselemente der Verformung umfassen, die mit den Gewinden (4) zusammenwirkend aktiv sind, wobei die Verstärkungselemente konische Oberflächen umfassen, die in gegenseitigem Kontakt stehen und zusammenwirkend definiert sind zwischen:
- dem ersten Zusammenschaltungselement (2) und dem zweiten Zusammenschaltungselement (3) und/oder zwischen dem ersten Zusammenschaltungselement (2); und/oder
- dem zweiten Zusammenschaltungselement (2) und dem ersten Teil (S1) der Maschine; und/oder
- dem zweiten Zusammenschaltungselement (3) und dem zweiten Teil (S2) der Maschine.

8. Verbindung nach Anspruch 1, wobei die zugehörigen Zwangsmittel, die zwischen dem ersten Zusammenschaltungselement (2) und dem zweiten Zusammenschaltungselement (3) eingefügt sind, eine Vielzahl von koronalen Oberflächen (6) umfassen, die durch eine Abfolge von koaxialen Nuten und Rippen entlang der idealen Achse (S3) definiert sind, wobei die koronalen Oberflächen (6) an dem ersten und dem zweiten Zusammenschaltungselement (2, 3) erhalten werden und im Falle der Montage der Verbindung (1) aneinander angrenzen.

9. Maschine, vorzugsweise für tragbare Schüttelmaschine, umfassend:
- einen Maschinenkörper (S1), in dem ein Motor und ein vibrierender kinematischer Mechanismus, der mit dem Motor verbunden ist, untergebracht sind; und
- eine vibrierende Stange (S2), die mit dem vibrierenden kinematischen Mechanismus verbunden ist,
**dadurch gekennzeichnet, dass** sie auch mindestens eine Verbindung (1) umfasst, die zwischen dem Maschinenkörper (S1) und vorzugsweise zwischen dem vibrierenden kinematischen Mechanismus des Maschinenkörpers (S1) und der vibrierenden Stange (S2) eingefügt ist, wobei die Verbindung (1) vom Typ nach einem der vorhergehenden Ansprüche ist.

## Revendications

1. Joint pouvant être interposé entre deux parties (S1, S2) d'un ensemble mécanique, ledit joint (1) comprenant :
- un premier élément d'interconnexion (2) pouvant être relié à ladite première partie (S1) de l'ensemble mécanique ;
- un second élément d'interconnexion (3) pouvant être relié à ladite seconde partie (S2) de l'ensemble mécanique et pouvant également être relié audit premier élément d'interconnexion (2) ;
- des moyens de contrainte connexes interposés entre ledit premier élément d'interconnexion (2) et ledit second élément d'interconnexion (3) lui-même de manière à obtenir une rotation relative entre lesdits éléments d'interconnexion (2, 3) autour d'un axe idéal (S3) ; et
- des moyens de connexion réversibles configurés pour relier le premier élément d'interconnexion (2) par rapport à la première partie (S1) et/ou configurés pour relier le second élément d'interconnexion (3) par rapport à la seconde partie (S2),
**caractérisé en ce qu'**au moins le premier élément d'interconnexion (2) et/ou le second élément d'interconnexion (3) est/sont constitué(s) de deux demi-parties, lesdites demi-parties (2a) définissant de préférence une cavité d'engagement qui peut être actionnée par un opérateur au moyen d'un outil d'engagement pendant l'interconnexion du joint à l'ensemble mécanique.

2. Joint selon la revendication 1, dans lequel il existe également des moyens de réglage de la liberté de rotation relative entre le premier élément d'interconnexion (2) et le second élément d'interconnexion (3), lesdits moyens de réglage de la liberté de rotation relative permettant de déterminer un arc angulaire de rotation relative et/ou une plage de vitesse de rotation relative entre les éléments d'interconnexion (2, 3).

3. Joint selon les revendications 2 ou 3, dans lequel les moyens de connexion réversibles et/ou les moyens de réglage de la liberté de rotation relative comprennent des filets (4) obtenus par coopération entre :
- le premier élément d'interconnexion (2) et la première partie (S1) de l'ensemble mécanique ; et/ou
- le second élément d'interconnexion (3) et la seconde partie (S2) de l'ensemble mécanique.

4. Joint selon la revendication 3, dans lequel les moyens de connexion réversibles et/ou les moyens de réglage de la liberté de rotation relative coïncident :

5. Joint selon la revendication 3, dans lequel les moyens de connexion réversibles et/ou les moyens de réglage de la liberté de rotation relative comprennent également des interfaces d'actionnement 5 qui peuvent être actionnées par un opérateur, de préférence au moyen d'un outil pour imposer une rotation de préférence autour dudit axe idéal (S3), lesdites interfaces d'actionnement (5) étant solidaires du premier élément d'interconnexion (2) ou du second élément d'interconnexion (3) et comprenant de préférence des écrous profilés ou des surfaces prismatiques contrefaisant des outils manœuvrables par ledit opérateur.

6. Joint selon la revendication 5, dans lequel les moyens de réglage de la liberté relative peuvent déterminer sélectivement une valeur variable de friction et/ou de résistance au mouvement relatif entre le premier élément d'interconnexion (2) et le second élément d'interconnexion (3), ladite valeur variable de friction pouvant être déterminée en fonction d'une valeur correspondante et/ou d'un sens de ladite rotation autour de l'axe idéal (S3) et, de préférence, en fonction d'une déformation du premier élément d'interconnexion (2) et/ou du second élément d'interconnexion (3) imposée par ladite rotation autour de l'axe idéal (S3).

7. Joint selon les revendications 3 et 6, dans lequel les moyens de réglage de la liberté relative comprennent en outre des éléments d'amplification de la déformation coopérant avec les filets (4) : lesdits éléments d'amplification comprennent des surfaces coniques en contact mutuel et définies de manière coopérative entre elles :
- le premier élément d'interconnexion (2) et le second élément d'interconnexion (3) et/ou entre le premier élément d'interconnexion (2) ; et/ou
- le second élément d'interconnexion (2) et la première partie (S1) de l'ensemble mécanique ; et/ou
- le second élément d'interconnexion (3) et la seconde partie (S2) de l'ensemble mécanique.

8. Joint selon la revendication 1, dans lequel les moyens de contrainte connexes interposés entre le premier élément d'interconnexion (2) et le second élément d'interconnexion (3) comprennent une pluralité de surfaces coronales (6) définies par une succession de rainures et de crêtes coaxiales le long de l'axe idéal (S3), lesdites surfaces coronales (6) étant obtenues sur les premier et second éléments d'interconnexion (2, 3) et étant mutuellement adjacentes en cas d'assemblage du joint (1).

9. Ensemble mécanique, de préférence de type agitateur portable, comprenant :
- un corps de machine (S1) renfermant un moteur et un mécanisme cinématique vibrant relié audit moteur ; et
- une tige vibrante (S2) reliée audit mécanisme cinématique vibrant,
**caractérisé en ce qu'**il comprend également au moins un joint (1) interposé entre ledit corps de machine (S1), et de préférence entre le mécanisme cinématique vibrant du corps de machine (S1), et la tige vibrante (S2), ledit joint (1) étant du type selon l'une quelconque des revendications précédentes.
